# EUROPEAN PATENT APPLICATION

(11) **EP 2 763 078 A1**
(43) Date of publication of application: **06.08.2014**
(21) Application number: 12836458.5
(22) Date of filing: 27.09.2012
(51) Int. Cl.: G06K 9/46

(54) **METHOD, APPARATUS AND COMPUTER READABLE RECORDING MEDIUM FOR DETECTING A LOCATION OF A FACE FEATURE POINT USING AN ADABOOST LEARNING ALGORITHM**

(30) Priority: 27.09.2011 KR 20110097794
(71) Applicant: Intel Corporation, Santa Clara, CA 95054 (US)
(72) Inventor: CHEON, Yeong Jae, Seoul 153-861 (KR); PARK, Yong Chan, Seoul 151-015 (KR)
(74) Representative: Goddar, Heinz J.
(86) International application number: PCT/KR2012/007843
(87) International publication number: WO 2013/048159

(57) **Abstract**

The present invention relates to a method, an apparatus and a computer readable recording medium for detecting the location of face feature point using an Adaboost learning algorithm. According to one embodiment of the present invention, a method for detecting the location of a face feature point comprises of: (a) a step of classifying a sub-window image into a first recommended feature point candidate image and a first non-recommended feature point candidate image using the first feature patterns selected by an Adaboost learning algorithm, and generating the first feature point candidate location information of the first recommended feature point candidate image; and (b) a step of re-classifying said sub-window image classified into said first non-recommended feature point candidate image, into a second recommended feature point candidate image and a second non-recommended feature point candidate image using second feature patterns selected by the Adaboost learning algorithm, and generating second feature point candidate location information of the second recommended feature point recommended candidate image, wherein said first feature patterns are determined based on the features of a common face image, and said second feature patterns are determined based on the features of an uncommon face image.

## Description

### Technical Areas

The present invention relates to a method, an apparatus and a computer readable recording medium for detecting the location of face feature point using an Adaboost learning algorithm. More specifically, the present invention relates to a method, an apparatus and a computer readable recording medium for detecting the location of face feature point within a face image in uncommon condition using a multi-layer Adaboost classifier.

### Prior Art

Biometric technology is a technology that recognizes the physical features of fingerprint, face, iris and vein, which vary from person to person. Since these physical features cannot be stolen or duplicated by other people, unlike keys or passwords, and have no risk to be changed or lost, they can be used in applications such as security. Since dual face recognition technology includes a technology that detects a facial area in a video or photo image and then identifies the identity of the face included in the detected facial area, it can be used for various applications suiting the needs not only of security, but also of the Smartphone era.

Specifically, the face recognition technology identifies a face using the location of feature points in a detected face image, and the feature points can include the central point of an eye, both end points of each eye, both end points and the central point of an eyebrow, and both end points of a lip.

The technologies used for detecting the location of these face feature points include the method using histogram, the method using principal component analysis (PCA) and the method using Adaboost learning algorithm, and these methods have been certain to provide good results to some extent when general face images (i.e., normal face images) were applied.

However, the methods described above have a problem of noticeably deteriorating performance in detecting the location of feature points when applied to uncommon face images (e.g., face images with glasses, face images with hairs partially covering a face, face images with rich expressions, non-frontal face images, partially dark face images, face images with closed eyes, etc.).

Therefore, it has become necessary to have a technology that can guarantee stable performance in detecting the location of face feature points for uncommon face images as well as common face images.

### Detailed Explanation of the Invention

### Technical Task

The objective of the present invention is to solve all of the problems described above.

Furthermore, another objective of the present invention is to be able to guarantee the performance in detecting the location of face feature points by correctly detecting even the feature point candidate location for uncommon face images as well as the feature point candidate location of common face images while using the Adaboost learning algorithm for detecting the location of face feature points.

### Problem Solving Method

The representative configuration of the present invention to achieve the objectives described above is as follows:

According to one embodiment of the present invention, the present invention provides a method for detecting the location of a face feature point using the Adaboost learning algorithm which comprises of: (a) a step of classifying a sub-window image into a first recommended feature point candidate image and a first non-recommended feature point candidate image using the first feature patterns selected by an Adaboost learning algorithm, and generating the first feature point candidate location information of the first recommended feature point candidate image; and (b) a step of re-classifying said sub-window image classified into said first non-recommended feature point candidate image, into a second recommended feature point candidate image and a second non-recommended feature point candidate image using second feature patterns selected by the Adaboost learning algorithm, and generating second feature point candidate location information of the second recommended feature point recommended candidate image.

According to another embodiment of the present invention, the present invention provides a device for detecting the location of a face feature point using Adaboost learning algorithm which comprises of: a classifier that classifies a sub-window image into a first recommended feature point candidate image and a first non-recommended feature point candidate image using the first feature patterns selected by an Adaboost learning algorithm, and generates the first feature point candidate location information of the first recommended feature point candidate image; and at least one reclassifier that reclassifies said sub-window image classified into said first non-recommended feature point candidate image, into a second recommended feature point candidate image and a second non-recommended feature point candidate image using second feature patterns selected by the Adaboost learning algorithm, and generating second feature point candidate location information of the second recommended feature point recommended candidate image.

The method and apparatus of the present invention have such characteristics in which said first feature patterns are based on the features of a common face image, said second feature patterns are based on the features of an uncommon face image, and said first feature patterns and said second feature patterns designate at least one dark area and at least one bright area respectively.

The apparatus of still another embodiment of the present invention provides additionally a feature point candidate location generating member which stores and generates said first feature point candidate location information and said second feature point candidate location information for the sub-window images of a face image, and a feature point candidate location clustering member which forms clusters by conducting clustering for said first feature point candidate location information and said second feature point candidate location information and generates information about the central point location of said first feature point candidate location information and said second feature point candidate location information , from which the largest cluster of these clusters is designated as the feature point location information.

In addition, the present invention further provides a computer readable recording medium for recording the computer program to implement said method to embody the present invention.

### Effects of This Invention

The present invention achieves the effect of improving the feature point location detecting performance by detecting the location of feature points through the detection of the feature point candidate location for uncommon face images as well as the feature point candidate location for a common face image.

### Concise Explanation of the Drawings

FIG 1 is a block diagram showing the configuration of the face feature point location detecting apparatus in accordance with one embodiment of the present invention.
FIG 2 describes the sub-window image entered into the feature point candidate location-detecting member in accordance with one embodiment of the present invention.
FIG 3 describes the function of the feature point candidate location clustering member.
Figure 4 is an illustration of the feature point candidate location detector using the Adaboost learning algorithm in accordance with one embodiment of the present invention.
FIG 5 is an illustration of the strong classifier in one embodiment of the feature point candidate location detector shown in FIG. 4.
FIG 6 shows the feature patterns selected by learning with the Adaboost learning algorithm in accordance with one embodiment of the present invention.

### Best Form for the Implementation of the Invention

The detailed explanation on the present invention described later will be provided referring to the attached drawings as an example of a specific embodiment to implement the present invention. These embodiments will be explained in detail enough to implement the present invention by a person having ordinary skill in the art. It must be understood that various embodiments of the present invention are different from each other but they do not have to be mutually exclusive. For example, the specific configuration, structure and characteristics described here can be embodied in another embodiment without departing from the spirit and scope of the present invention in relation to one embodiment. And it must also be understood that the position and deployment of individual components in each disclosed embodiment can be changed without departing from the spirit and scope of the present invention. Therefore, the detailed explanation described later is not given with a view to restrict the present invention, but the scope of the present invention, if explained properly, will be restricted only by the assertions made by the claims and all equivalent scope along with the attached claims. Similar reference numbers on the drawings refer to identical or similar functions throughout various aspects.

Below, the preferred embodiments of the present invention will be explained in detail referring to the drawings to ensure that a person having ordinary skill in the art to which this invention belongs to can implement the present invention.

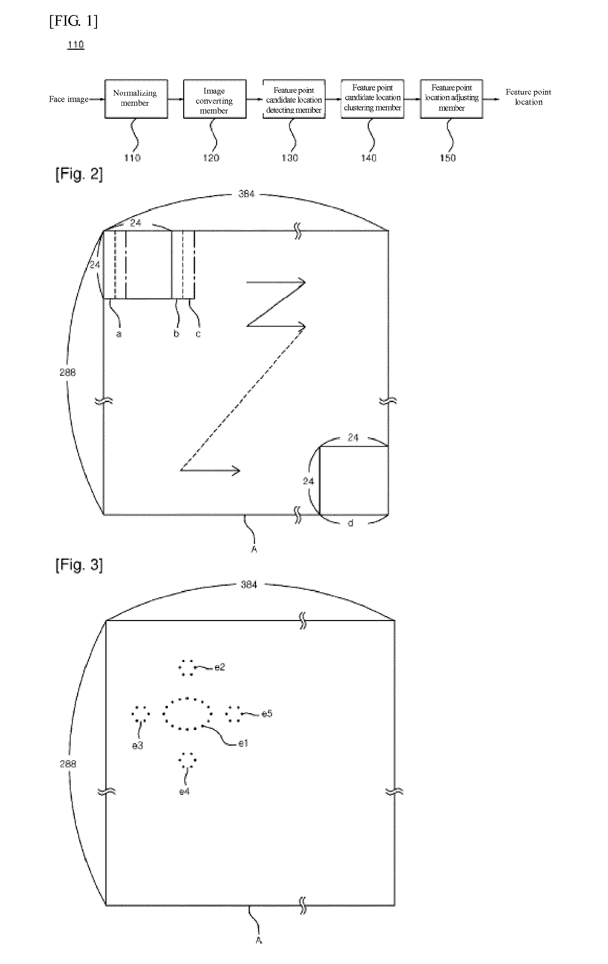

FIG 1 is a block diagram showing the configuration of the face feature point location detecting apparatus in accordance with one embodiment of the present invention.

Referring to FIG. 1, the face feature point location detector (100) can include a normalization member 110, an image conversion member (120), a feature point candidate location detecting member

(130), a feature point candidate location clustering member (140) and a feature point location adjusting member (150).

The function of each of the blocks shown in FIG. 1 is explained below.

The normalization member (110) can normalize a face image to a gray image of a pre-determined size. In other words, while a face image entered can be diverse in size and be a color image, the normalization member (110) can normalize it to a gray image of a pre-determined size to detect the feature point location of a face image of varying size.

The image conversion member (120) can convert a gray image to a multi-scale image by performing Modified Census Transform (MCT). In other words, the image conversion member (120) can convert a gray image to an image with more scales than the gray image. If each pixel of the gray image has 256 scales from, e.g., 0 to 255, the image conversion member (120) can convert each pixel of the gray image to 512 scales, e.g., from 0 to 511.

The feature point candidate location detecting member (130) can classify a sub-window image into a first recommended feature point candidate image and a first non-recommended feature point candidate image using the first feature patterns selected by an Adaboost learning algorithm through the learning of the patterns of common face images when a sub-window image, or multi-scale image, is entered, classify the sub-window image classified as the first non-recommended feature point candidate image into a second recommended feature point candidate image and a second non-recommended feature point candidate image using the second feature patterns selected by the Adaboost learning algorithm through the learning of the patterns of uncommon face images when a sub-window image classified as the first non-recommended feature point candidate image is entered, and output the first feature point location information of the first recommended feature point candidate image and the second feature point location information of the second recommended feature point candidate image.

Herein, in classifying the sub-window image into either the first recommended feature point candidate image or the first non-recommended feature point candidate image using the first feature patterns selected by the Adaboost learning algorithm through the learning of the patterns of a common face image, the first feature patterns may refer to the patterns included in already one strong classifier included in the first layer to be discussed later, and if multiple strong classifiers are included in the first layer at this time, the patterns included in each strong classifier included in the first layer can, of course, be different from each other. Furthermore, if a sub-window image classified as the first non-recommended feature point candidate image is entered into the feature point candidate location detecting member (130), the second feature patterns may refer to the patterns included in at least one strong classifier included in the second layer or thereafter (i.e., the second layer to the k layer) to be discussed later in classifying the sub-window image classified as the first non-recommended feature point candidate image into a second recommended feature point candidate image and a second non-recommended feature point candidate image using the second feature patterns selected by the Adaboost learning algorithm through the learning of the patterns of uncommon face images, and at this time, the patterns included in each strong classifier can, of course, vary not only from layer to layer but also within one same layer.

Furthermore, the method and apparatus of the present invention have such characteristics in which said first feature patterns are based on the features of a common face image, said second feature patterns are based on the features of an uncommon face image, and said first feature patterns and said second feature patterns designate at least one dark area and at least one bright area respectively. Herein, whether or not it is a common face image can be determined by determining whether or not it deviates from the pre-determined threshold value by comparing it to the normal face image, and whether the area included in the first and second feature patterns is a dark area or a bright area can be distinguished based on at least one pre-determined brightness value. More specifically, if a face image is determined as uncommon, the degree of abnormality can be assessed, and multiple pre-determined threshold values can be prepared for this.

FIG 2 explains the sub-window image entered into the feature point candidate location detecting member (130) in accordance with one embodiment of the present invention, wherein A indicates the image in the size of 384 x 288 converted by the image conversion member (120), and a, b, c, and d can indicate the sub-window images in the size of 24 x 24 sequentially entered into the feature point candidate location detecting member (130). In other words, the images from the first sub-window image a to the last sub-window image d is obtained while moving by an increment of pixel from the first pixel to the last pixel of the image (A) can be entered sequentially into the feature point candidate location detecting member (130).

The feature point candidate location clustering member (140) makes clusters by performing a clustering referring to the feature point location information of the first recommended feature point candidate image and second recommended feature point candidate image obtained for the image A detected by the feature point candidate location detecting member (130) and then, can output the location information of, for example, the central point of the largest cluster as the final feature point location information.

FIG 3 is to explain the function of the feature point candidate location clustering member (140), wherein the parts shown in black dots indicate the feature points according to the first feature point location information and the second feature point location information obtained by the feature point candidate location detecting member (130), and when these feature points form five clusters from e1 to e5, the location information of the central point of the largest cluster e1 can be the final feature point location information. Of course, the present invention is limited to this but various modified embodiments can be introduced. For example, it does not have to be limited to the central point but if it is a certain representative location that can represent the relevant cluster, the information about this location will suffice for the proper functioning.

After receiving the final feature point location information, the feature point location adjusting member (150) can output the feature point location information by adjusting it to the location information corresponding to the size of the face image to be entered into the normalization member (110). In other words, since the size of a face image has been changed by the normalization member (110), the feature point location adjusting member (150) can perform the function of adjusting the final feature point location information obtained by the feature point candidate location clustering member (140) to the location information corresponding to the size of a face image to be entered into the normalization member (110).

In FIG. 1, the normalization member (110), the image conversion member (120) and the feature point location adjusting member (150) may not be needed if a face image entered into the face feature point location detecting apparatus (100) is a multi-scale image pre-determined for the feature point candidate location detector (130).

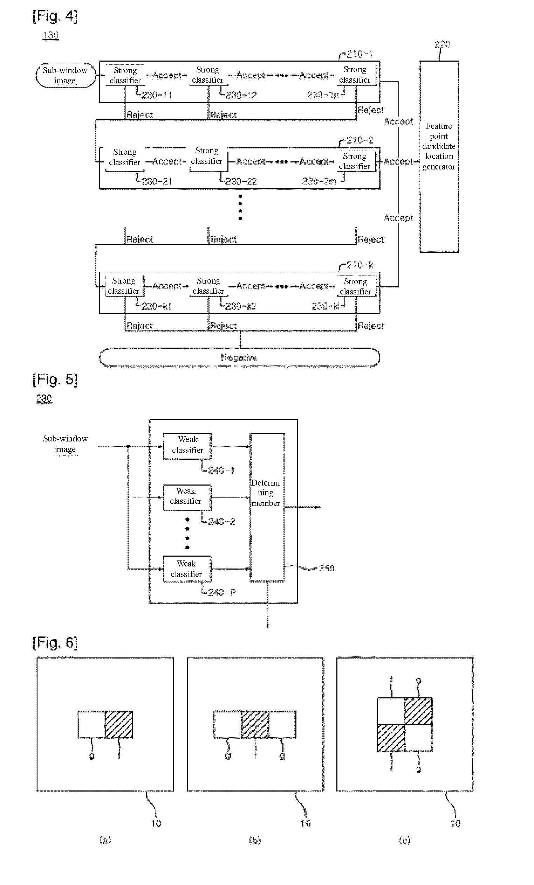

Figure 4 is an illustration of the feature point candidate location detecting member (130) in accordance with one embodiment of the present invention.

Referring to FIG. 4, the feature point candidate location detecting member (130) in accordance with one embodiment of the present invention can include a classifier (210-1), reclassifiers (210-2 to 210-k) and a feature point candidate location generator (220). Herein, the classifier (210-1) can be referred to as belonging to the so called first layer, and the reclassifiers (210-2 to 210-k) can be referred to as belonging to the so called layers ranging from the second layer to the k^{th} layer respectively. For reference, the first layer can include at least one strong classifier which contains the patterns obtained through the learning about common face images, and each of the layers from second to k^{th} can include at least one strong classifier which contains the patterns obtained through the learning about face images of higher degree of abnormality as the number k goes higher. The classifier (210-1), which is a classifier for the first layer, can include strong classifiers (230-11 to 230-ln), the reclassifier (210-2), which is a classifier for the second layer, can include strong classifiers (230-21 to 230-2m), and the reclassifier (210-k), which is a classifier for the k^{th} layer, can include strong classifiers (230-k1 to 230-kl). The classifier (210-1) and the reclassifiers (210-2 to 210-k) can include one or more strong classifiers, which have a configuration different from each other.

The function of each of the blocks shown in FIG. 4 is explained below.

The classifier (210-1) can classify the entered sub-window image into either the first recommended feature point candidate image or the first non-recommended feature point candidate image using the first feature patterns selected by the learning of the Adaboost learning algorithm among the patterns of common face images, and can generate the location information for the first recommended feature point candidate image.

Each of the reclassifiers (210-2 to 210-k) can reclassify the sub-window image classified as the non-recommended feature point candidate image by the classifier (210-1), which is the classifier for the first layer, and the reclassifiers (210-2 to 210-k), which are the classifier for the second layer, into either the second recommended feature point candidate image or the second non-recommended feature point candidate image using the second feature patterns selected by the Adaboost learning algorithm among the patterns of uncommon face images, and can generate the feature point location information for the second recommended feature point candidate image.

According to this, the classifier (210-1) can generate the first feature point candidate location of the first recommended feature point candidate image for a common face image, and each of the reclassifiers (210-2 to 210-k) can generate the second feature point candidate location of the second recommended feature point candidate image for an uncommon face image.

On the other hand, the strong classifiers (230-11 to 230-ln) included in the first layer classifies the entered sub-window image into the first recommended feature point candidate image and the first non-recommended feature point candidate image using the first feature patterns selected through the Adaboost learning algorithm, and outputs the first feature point candidate location information. Herein, in order to output the first feature point candidate location information, all of them must be determined as the first recommended feature point candidate image by the strong classifiers (230-11 to 230-1n) included in the first layer.

Furthermore, the strong classifiers (230-21 to 230-2m) included in the second layer classifies the entered sub-window image into the second recommended feature point candidate image and the second non-recommended feature point candidate image using the second feature patterns selected through the Adaboost learning algorithm, and outputs the second feature point candidate location information. Herein, in order to output the second feature point candidate location information through the second layer, all of them must be determined as the second recommended feature point candidate image by the strong classifiers (230-21 to 230-2m) included in the second layer.

Furthermore, the strong classifiers (230-k1 to 230-kl) included in the k^{th} layer classifies the entered sub-window image into the second recommended feature point candidate image and the second non-recommended feature point candidate image using the second feature patterns (i.e., the second feature patterns which can be different from the second feature patterns used by the strong classifiers 230-21 to 230-2m) selected through the Adaboost learning algorithm, and outputs the second feature point candidate location information. Herein, in order to output the second feature point candidate location information through the k^{th} layer, all of them must be determined as the second recommended feature point candidate image by the strong classifiers (230-k1 to 230-k1) included in the k^{th} layer.

In each of the strong classifiers connected as a cascade (230-11 ∼ 230-1n), (230-21 ∼ 230-2m), ..., (230-k1 ∼ 230-kl), the strong classifier at the front end can classify the sub-window image into the first and second recommended feature point candidate images and the first and second non-recommended feature point candidate images using a smaller number of the first and second feature points, compared to the strong classifier at the rear end, selected through the Adaboost learning algorithm. For example, the strong classifier (230-11) can use two first feature patterns, the strong classifier (230-12) can use ten first feature patterns, and the strong classifier (230-1n) can use 30 feature patterns. The reason for this is to perform the filtering lightly with a small number of patterns at the strong classifier at the front end of each layer in consideration of the fact that most of the sub-window images are determined as "negative (i.e., non-recommended feature point candidate image continued up to the k^{th} layer) since the part determined as the location of face feature point is small in a single image. Therefore, even if 100 sub-window images sequentially entered at the strong classifier at the front end were classified into the first and second recommended feature point candidate images, only 50 sub-window images can be classified into the first and second recommended feature point candidate images (i.e., accepted), and the first and second recommended feature point candidate images that are passed (accepted) at the nth strong classifier at the last end can be reduced to 10. Therefore, the feature point location information of the first and second recommended feature point candidate images generated at the classifier (210-1), the reclassifiers (210-2 to 210-k) and the strong classifiers at the last end (230-1n, 230-2m, 230-kl) can be the location information with a higher possibility of having feature points.

The feature point candidate location generator (220) can store and output the first and second feature point candidate location information output by each classifier (210-1) and the reclassifiers (210-2 to 210-n). The feature point candidate location generator (220) can store and output the first and second feature point candidate location information for all sub-window images of the image A in FIG 2.

FIG 5 is an illustration of the strong classifier in one embodiment of the feature candidate location detecting member (130) shown in FIG 4.

Referring to FIG 5, the strong classifier (230) according to one embodiment can include weak classifiers (240-1 to 240-p) and a determining member (250).

The function of each of the blocks shown in FIG. 5 is explained below.

When a sub-window image is entered, each of the weak classifiers 240-1 to 240-p can generate a feature value which indicates whether the image is a recommended feature point candidate image and a non-recommended feature point candidate image using the feature patterns which are different from each other.

The determining member (250) combines the results from the weak classifiers (240-1 to 240-p) and it outputs the feature point candidate location information and the sub-window image to the strong classifier at the rear end if it is a recommended feature point candidate image (it is recorded as a "positive" condition at the feature point candidate location generator (220) if there is no strong classifier at the rear end), whereas it outputs the non-recommended feature point candidate location information and the sub-window image to the reclassifiers (210-2 to 210-k) at the rear end if it is a non-recommended feature point candidate image.

FIG 6 shows the feature patterns selected by the Adaboost learning algorithm in accordance with one embodiment of the present invention, wherein the feature patterns a, b and c can be used for different weak classifiers if three weak classifiers (240-1 to 240-3) form one strong classifier. The feature pattern (a) can show a pattern including two rectangles placed at the relevant locations within the sub-window 10, the feature pattern (b) can show a pattern including three rectangles placed at the relevant locations within the sub-window 10, and the feature pattern (c) can show a pattern including four rectangles placed at the relevant locations within the sub-window 10. A dark image can be present in the rectangle with diagonal lines f of the feature patterns a, b and c and a bright image can be present in the rectangle g. In other words, the feature patterns can designate an area f in which one more dark images exist within the sub-window 10 and an area g in which one or more bright images exist. Furthermore, each of the feature patterns a, b and c can be assigned a higher weight if the probability of finding the location of a feature point by the Adaboost learning algorithm is high and a lower weight if the probability is low, and the sum of the weights of the weak classifiers (240-1 to 240-3) forming one strong classifier can be set to 1. In addition, each of the weak classifiers and the strong classifiers can be assigned a threshold value to perform a classification into a recommended feature point candidate image and a non-recommended feature point candidate image through the Adaboost learning algorithm.

Referring to FIG. 6, the method according to one embodiment by which the weak classifiers (240-1 to 240-p) in FIG. 5 classify a sub-window image into a recommended feature point candidate image and a non-recommended feature point candidate image can be explained as follows:

Each of the weak classifiers (240-1 to 240-p) in FIG 5 can generate a feature value indicating whether it is a recommended feature point candidate image or a non-recommended feature point candidate image by comparing the difference between the sum of the pixels within the sub-window image existing in the selected rectangle f of one pattern of the sub-window 10 and the sum of the pixels within the sub-window image existing in the rectangle g with the established threshold value. The feature value can be 1 in the case of a recommended feature point candidate image and 0 in the case of a non-recommended feature point candidate image.

Referring to FIG. 6, the method according to one embodiment by which the determining member (250) in FIG. 5 classifies a sub-window image into a recommended feature point candidate image and a non-recommended feature point candidate image by combining the feature values output from the weak classifiers (240-1 to 240-p) can be explained as follows:

The determining member (250) can find the total obtained by multiplying the feature value output by each of the weak classifiers (240-1 to 240-p) by a pre-determined weight established for each of the weak classifiers (240-1 to 240-p), and determine whether it is a recommended feature point candidate image or a non-recommended feature point candidate image by comparing this value with the threshold value established at the strong classifier (230).

Furthermore, the strong classifier (230) can calculate and output the reliability value for the feature point candidate location information of a recommended feature point candidate image. In this case, the determining member (250) can output the sum obtained by multiplying the feature value output from each of the weak classifiers (240-1 to 240-p) by the weight of each of the weak classifiers (240-1 to 240-p) as the reliability value.

Furthermore, the feature point candidate location clustering member (140) can determine the final feature point candidate location information referring to the sum obtained by multiplying each of the feature point candidate location information of the largest cluster generated by clustering using the reliability value by the reliability value of each of the feature point candidate location information.

As an example of the Adaboost learning algorithm used in the present invention, one can refer to the paper developed by Paul Viola and Michael J Jones and published on "International Journal of Computer Vision, Volume 57, Issue 2" in May 2004. All technical contents used to detect the location of a feature point included in this paper can be included in the face feature point detecting method according to the present invention, including the technology of selecting a feature pattern from the patterns of a face image through the Adaboost learning algorithm disclosed in this paper and the technology detecting the liaison office of a feature point by connecting the strong classifiers in a cascade.

Though not illustrated, the face recognition system in accordance with one embodiment of the present invention can identify an entered face image by comparing the feature point location information extracted from a registered face image with the feature point location information extracted from the face image entered and then determining the degree of similarity.

The embodiments in accordance with the present invention described so far can be embodied in the form of a program instruction that can be implemented through various computer components and recorded on a computer readable recording medium. Said computer readable recording medium can include program instruction, data file, data structure, etc. separately or in combination. The program instruction recorded on said computer readable recording medium can be one designed and configured specifically for the present invention or one that is recommended as it is well known to a person having ordinary skill in the computer software area. The examples of the computer readable recording medium include the hardware devices configured specially to store and run instruction like magnetic media such as hard disk, floppy disk and magnetic tape, optical recording media such as CD-ROM and DVD, magneto-optical media like floptical disk, ROM, RAM and flash memory. The examples of program instruction include high level language codes that can be run by a computer using such means as interpreter as well as machine language codes created by a compiler. Said hardware device can be formed to run with one or more software module to carry out the processing of the present invention and the same applies to the reverse.

Though the present invention has been described so far with particular items such as specific components and by limited embodiments and drawings, they have been provided merely to facilitate the overall understanding on the present invention and the present invention is not limited by the embodiments described above and a person having ordinary skill in the art to which the present invention belongs may be able to attempt various corrections and modifications in these items.

Therefore, the idea of the present invention shall not be limited to the embodiments described above and the idea of the present invention encompass not only the scope of patent claims described later but also all modifications made equally or equivalently with the scope of these claims.

### Explanation on the Numbers Marked

100: Face feature point location detecting apparatus
110: Normalization member
120: Image conversion member
130: Feature point candidate location detecting member
140: Feature point candidate location clustering member
150: Feature point location adjusting member
210-1: Classifier
210-2 to 210-k: Reclassifiers
220: Feature point candidate location generator
230-11 to 230-kl: Strong classifier
240-1 to 240-p: Weak classifiers
250: Determining member

## Claims

1. A method for detecting the location of a face feature point using the Adaboost learning algorithm which comprises of: (a) a step of classifying a sub-window image into a first recommended feature point candidate image and a first non-recommended feature point candidate image using the first feature patterns selected by an Adaboost learning algorithm, and generating the first feature point candidate location information of the first recommended feature point candidate image; and (b) a step of re-classifying said sub-window image classified into said first non-recommended feature point candidate image, into a second recommended feature point candidate image and a second non-recommended feature point candidate image using second feature patterns selected by the Adaboost learning algorithm, and generating second feature point candidate location information of the second recommended feature point recommended candidate image.

2. The method for detecting the location of a face feature point using Adaboost learning algorithm of claim 1 which additionally comprises of: (c) a step of storing said first feature point candidate location information and said second feature point candidate location information for the sub-window images of a face image; and (d) a step of forming clusters by conducting clustering referring to said first feature point candidate location information and said second feature point candidate location information, and generating the location information about the prescribed representative location of said first feature point candidate location information and said second feature point candidate location information which from the largest cluster of these clusters is designated as the feature point location information.

3. The method for detecting the location of a face feature point using the Adaboost learning algorithm of claim 1, wherein said first feature patterns are determined based on the features of common face images and said second feature patterns are determined based on the features of uncommon face images.

4. The method for detecting the location of a face feature point using the Adaboost learning algorithm of claim 3, wherein said common face image and said uncommon face image are determined by checking whether or not they deviate from the pre-determined threshold values in comparison with normal face images.

5. The method for detecting the location of a face feature point using the Adaboost learning algorithm of claim 1, wherein each of said first feature patterns and said second feature patterns designates one or more bright areas and one or more dark areas within said sub-window image.

6. The method for detecting the location of a face feature point using the Adaboost learning algorithm of claim 5, wherein said one or more bright areas and said one or more dark areas are distinguished based on at least one pre-determined brightness value.

7. The method for detecting the location of a face feature point using the Adaboost learning algorithm of claim 1, wherein said step (a) additionally comprises of: a step of generating first feature values to determine whether said sub-window image is said first recommended feature point candidate image or said first non-recommended feature point candidate image by comparing each difference between the first value obtained by summing the pixel values within said sub-window image designated by said dark area of each of said first feature patterns and the second value obtained by summing the pixel values within said sub-window image designated by said bright area with each of the first threshold value established for each of said first feature patterns; and a step of classifying said sub-window image into either a first recommended feature point candidate image or said first non-recommended feature point candidate image by comparing the first reliability value which is the sum of the values obtained by multiplying each of said first feature values by a weight assigned to each of said first feature values with the second threshold value.

8. The method for detecting the location of a face feature point using the Adaboost learning algorithm of claim 7, wherein said step (b) additionally comprises of: a step of generating second feature values to determine whether said sub-window image is said second recommended feature point candidate image or said second non-recommended feature point candidate image by comparing each difference between the third value obtained, by summing the pixel values within said sub-window image designated by said dark area of each said second feature patterns and the fourth value obtained by summing the pixel values within said sub-window image designated by said bright area with each of the third threshold value established for each of said second feature patterns; and a step of classifying said sub-window image into either a second recommended feature point candidate image or said second non-recommended feature point candidate image by comparing the second reliability value which is the sum of the values obtained by multiplying each of said second feature values by a weight assigned to each of said second feature values with the fourth threshold value.

9. The method for detecting the location of a face feature point using the Adaboost learning algorithm of claim 1, wherein said step (a) classifies said sub-window image into said first recommended feature point candidate images and said first non-recommended feature point candidate images using said first feature patterns in which the strong classifiers at the front end are fewer than the strong classifiers at the rear end, in at least one strong classifier that generates said first feature point candidate location information.

10. The method for detecting the location of a face feature point using the Adaboost learning algorithm of claim 9, wherein said step (b) reclassifies said sub-window image into said second recommended feature point candidate images and said second non-recommended feature point candidate images using said second feature patterns in which the strong classifiers at the front end are fewer than the strong classifiers at the rear end in at least one strong classifier that generates said second feature point candidate location information.

11. The method for detecting the location of a face feature point using the Adaboost learning algorithm of claim 1, wherein additionally included is (c) a step of storing said first feature point candidate location information, first reliability values for said first feature point candidate location information, storing said second feature point candidate location information, and second reliability values for said second feature point candidate location information with regard to said first recommended feature point candidate images and said second recommended feature point candidate images for the sub-window images of a face image.

12. The method for detecting the location of a face feature point using the Adaboost learning algorithm of claim 11 which additionally comprises of: (d) a step of forming clusters by conducting clustering for said first feature point candidate location information and said second feature point candidate location information, and generating the location information about the prescribed representative location of said first feature point candidate location information and said second feature point candidate location information, from which the largest cluster of these clusters is designated as the feature point location information.

13. The method for detecting the location of a face feature point using the Adaboost learning algorithm of claim 12, wherein said step (d) outputs said feature point location information, referring to the sum of the values obtained by multiplying each of said first feature point candidate location information forming said largest cluster by the first reliability value of each said first feature point candidate location information, and the values obtained by multiplying each said second feature point candidate location information by the second reliability value of each said second feature point candidate location information.

14. The method for detecting the location of a face feature point using the Adaboost learning algorithm of claim 2 which additionally comprises a step of normalizing an original face image into a gray image of the same size; and a step of converting said normalized face image into a multi-scale face image prior to the step (1), wherein said sub-window image is said multi-scale face image at said step (a).

15. The method for detecting the location of a face feature point using the Adaboost learning algorithm of claim 14 which additionally comprises (e) a step of adjusting said feature point location information to a location information corresponding to the size of said face image.

16. The method for detecting the location of a face feature point using the Adaboost learning algorithm of claim 15, wherein said sub-window image having a certain size is generated while converting said multi-scale face image to pixels.

17. An apparatus for detecting the location of a face feature point using the Adaboost learning algorithm which comprises of: a classifier that classifies a sub-window image into a first recommended feature point candidate image and a first non-recommended feature point candidate image using the first feature patterns selected by an Adaboost learning algorithm, and generates the first feature point candidate location information of the first recommended feature point candidate image; and at least one reclassifier that reclassifies said sub-window image classified into said first non-recommended feature point candidate image, into a second recommended feature point candidate image and a second non-recommended feature point candidate image using second feature patterns selected by the Adaboost learning algorithm, and generating second feature point candidate location information of the second recommended feature point recommended candidate image.

18. The apparatus for detecting the location of a face feature point using the Adaboost learning algorithm of claim 17 which additionally comprises of: a feature point candidate location generating member that stores said first feature point candidate location information and said second feature point candidate location information for the sub-window images of a face image; and a feature point candidate location clustering member that forms clusters by conducting clustering referring to said first feature point candidate location information and said second feature point candidate location information, and generates the location information about the prescribed representative location of said first feature point candidate location information and said second feature point candidate location information which from the largest cluster of these clusters is designated as the feature point location information.

19. The apparatus for detecting the location of a face feature point using the Adaboost learning algorithm of claim 17, wherein said first feature patterns are determined based on the features of common face images and said second feature patterns are determined based on the features of uncommon face images.

20. The apparatus for detecting the location of a face feature point using the Adaboost learning algorithm of claim 19, wherein said common face image and said uncommon face image are determined by checking whether or not they deviate from the pre-determined threshold values in comparison with normal face images.

21. The apparatus for detecting the location of a face feature point using the Adaboost learning algorithm of claim 17, wherein each of said first feature patterns and said second feature patterns designates one or more bright areas and one or more dark areas within said sub-window image.

22. The apparatus for detecting the location of a face feature point using the Adaboost learning algorithm of claim 20, wherein said one or more bright areas and said one or more dark areas are distinguished based on at least one pre-determined brightness value.

23. The apparatus for detecting a feature point candidate using Adaboost learning algorithm of claim 17, wherein said classifier has strong classifiers connected in a cascade, and classifies said sub-window image into said first recommended feature point candidate images and said first non-recommended feature point candidate images using said first feature patterns in which the strong classifiers at the front end are fewer than the strong classifiers at the rear end in said classifiers connected in a cascade.

24. An apparatus for detecting the location of a feature point candidate using the Adaboost learning algorithm of claim 23, wherein each of said strong classifiers has at least one weak classifier and one determining member; each of said weak classifiers calculates the difference between the first value obtained by summing the pixel values within said sub-window image designated by said dark area of pre-determined said first feature patterns and the second value obtained by summing the pixel values within said sub-window image designated by said bright area, and generates first feature values to determine whether said sub-window image is said first recommended feature point candidate image or said first non-recommended feature point candidate image by comparing said difference value with pre-determined first threshold value; and said determining member determines whether said sub-window image is a first recommended feature point candidate image or said first non-recommended feature point candidate image by comparing the first reliability value which is the sum of the values obtained by multiplying each of said first feature values by a weight assigned to each of said first feature values with the second threshold value.

25. The apparatus for detecting a feature point candidate using the Adaboost learning algorithm of claim 17, wherein said reclassifier has strong classifiers connected in a cascade, and reclassifies said sub-window image into said second recommended feature point candidate images and said second non-recommended feature point candidate images using said second feature patterns in which the strong classifiers at the front end are fewer than the strong classifiers at the rear end in said classifiers connected in a cascade.

26. An apparatus for detecting the location of a feature point candidate using the Adaboost learning algorithm of claim 25, wherein each of said strong classifiers has at least one weak classifier and one determining member; each of said weak classifiers calculates the difference between the third value obtained by summing the pixel values within said sub-window image designated by said dark area of pre-determined said second feature patterns and the fourth value obtained by summing the pixel values within said sub-window image designated by said bright area, and generates second feature values to determine whether said sub-window image is said second recommended feature point candidate image or said second non-recommended feature point candidate image by comparing said difference value with pre-determined third threshold value; and said determining member determines whether said sub-window image is a second recommended feature point candidate image or said second non-recommended feature point candidate image by comparing the second reliability value which is the sum of the values obtained by multiplying each of said second feature values by a weight assigned to each of said second feature values with the fourth threshold value.

27. The apparatus for detecting the location of a face feature point using the Adaboost learning algorithm of claim 17 which additionally comprises a feature point candidate location detecting apparatus that stores and outputs said first feature point candidate location information, first reliability values for said first feature point candidate location information, said second feature point candidate location information, and second reliability values for said second feature point candidate location information with regard to said first recommended feature point candidate images and said second recommended feature point candidate images for the sub-window images of a face image.

28. The apparatus for detecting the location of a face feature point using the Adaboost learning algorithm of claim 27 which additionally comprises a feature point candidate location clustering member that forms clusters by conducting clustering for said first feature point candidate location information and said second feature point candidate location information, and generates the location information about the prescribed representative location of said first feature point candidate location information and said second feature point candidate location information which from the largest cluster of these clusters is designated as the feature point location information.

29. The apparatus for detecting the location of a face feature point using the Adaboost learning algorithm of claim 28, wherein said feature point candidate location clustering member outputs said feature point location information referring to the sum of the values obtained by multiplying each of said first feature point candidate location information forming said largest cluster by the first reliability value of each of said first feature point candidate location information, and the values obtained by multiplying each of said second feature point candidate location information by the second reliability value of each of said second feature point candidate location information.

30. The apparatus for detecting the location of a face feature point using the Adaboost learning algorithm of claim 17 which additionally comprises a normalizing member that normalizes an original face image into a gray image of the same size; and an image converting member that converts said normalized face image into a multi-scale face image, wherein said sub-window image is said multi-scale face image.

31. The apparatus for detecting the location of a face feature point using the Adaboost learning algorithm of claim 30 which additionally comprises a feature point location adjusting member that adjusts said feature point location information to a location information corresponding to the size of said face image.

32. The apparatus for detecting the location of a face feature point using the Adaboost learning algorithm of claim 31, wherein said sub-window image having a certain size is generated while converting said multi-scale face image to pixels.

33. Computer readable recording media recorded with a computer program to execute a method specified in one of Claims 1 to 16.
